# EUROPÄISCHE PATENTSCHRIFT

(11) **EP 0 393 586 B1**
(45) Veröffentlichungstag und Bekanntmachung des Hinweises auf die Patenterteilung: **28.09.1994**
(21) Anmeldenummer: 90107261.1
(22) Anmeldetag: 17.04.1990
(51) Int. Cl.: B62M 3/08

(54) **Vorrichtung zur lösbaren Befestigung eines Schuhs an einem Fahrradpedal**
Device for the releasable fixing of a shoe to a bicycle pedal
Dispositif de fixation d'une chaussure sur une pédale de bicyclette

(30) Priorität: 17.04.1989 DE 3912577
(43) Veröffentlichungstag der Anmeldung: 24.10.1990
(73) Patentinhaber: Look S.A., 58004 Nevers cedex (FR)
(72) Erfinder: Tresorier, Jean François, F-58000 Nevers (FR); Mercat, Jean-Pierre, F-37110 Chateau-Renault (FR); Chretien, Jean-Louis, F-18320 Cours les Barres (FR)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 169 080
- EP-A- 0 296 898
- DE-A- 3 631 302
- GB-A- 2 202 499

## Beschreibung

Die Erfindung betrifft eine Vorrichtung zur lösbaren Befestigung eines Schuhs an einem Fahrradpedal von der im Oberbegriff des Patentanspruchs 1 angegeben Art.

Es sind solche als Sicherheitspedalanordnung bezeichnete Vorrichtungen bekannt, bei denen das elastisch ferdernde Verhakungsorgan aus einer auf einer Schwenkachse gelagerten und unter Federspannung stehenden Klaue oder einem entsprechenden Bügel besteht, und es sind ferner Vorrichtungen bekannt, bei denen zum Zwecke der Vereinfachung versucht wird, die Schwenkachsenlagerung für die Klaue oder den Bügel zu vermeiden.

Beispiele für die zuletzt genannten Ausführungsformen sind in der EP-A 0 296 898 und der EP-A 0 218 731 gezeigt.

Weiterhin ist aus der GB-A 2 202 499 bekannt, ein eigenelastisches, gradliniges Verhakungsorgan zu verwenden, das einteilig mit dem Pedalkörper ausgebildet ist und den Schuh im gekoppelten Zustand ohne Vorspannung am Pedalkörper hält.

Nachteilig bei dieser Lösung ist, daß die ohne die Gefahr einer unbeabsichtigten Trennung zwischen Schuh und Pedal übertragbaren Kräfte den praktischen Anforderungen nicht genügen, und daß die Gesamtkonstruktion auch hinsichtlich der Langzeit-Betriebssicherheit nicht zufriedenstellend ist.

Aufgabe der Erfindung ist es, eine Vorrichtung der eingangs genannten Art sowohl hinsichtlich des Material- als auch des Fertigungsaufwandes besonders wirtschaftlich auszubilden und dabei trotzdem die volle von der Praxis geforderte Funktionssicherheit zu gewährleisten.

Gelöst wird diese Aufgabe im wesentlichen durch die im kennzeichnenden Teil des Patentanspruchs 1 angegebenen Merkmale.

Durch den am Pedalkörper vorhandenen Festanschlag wird eine definierte Verklinkungsposition des Verhakungsorgans dauerhaft festgelegt und außerdem die Möglichkeit bereitgestellt, das Verhakungsorgan mit einer definierten Kraft gegen den Festanschlag vorzuspannen. Hierdurch kann eine vorgebbare Auslösekraft festgelegt werden, und die auf den Pedalkörper übertragbaren, keine Auslösung herbeiführenden Kräfte können vergrößert werden.

Vorzugsweise sind sowohl die Festaufnahme als auch der eigenelastische Schwenkhaken einteilig nach Art einer Monoblockausführung ausgebildet, aber es ist auch möglich, das Verhakungsorgan aus einem anderen Material mit geeigneten Elastizitätseigenschaften zu fertigen und dieses fest mit dem Pedalkörper zu verbinden, beispielsweise durch Verschrauben, Verschweißen, Verkleben und dergleichen.

Eine besonders vorteilhafte Ausführungsform der Erfindung zeichnet sich dadurch aus, daß das Verhakungsorgan in Form eines Schwenkhakens ausgebildet ist, der mit seinem pedalseitigem Lagerende in ein Aufnahmelager des Pedals eingreift und mit Abstand von dem dadurch gebildeten Schwenklager an einem pedalfesten Abstutzorgan anliegt, so daß zumindest ein im wesentlichen gradlinig ausgebildeter Schwenkhakenbereich zwischen Schwenklager und Abstützorgan einen elastischen Biegebereich bildet.

Die besonderen Vorteile dieses an einem Ende schwenkbar gelagerten und in einem Zwischenbereich fest abgestützten Schwenkhakens bestehen darin, daß trotz sehr kompakter Bauweise eine sehr hohe Festigkeit erreicht werden kann, daß der Vorgang des Einsteigens und des Lösens aufgrund der sehr definiert vorgebbaren Position des Schwenkhakens und seiner Federcharakteristik verbessert wird, und daß trotz des sehr einfachen Aufbaus eine Gesamtfunktion erreichbar ist, die wesentlich aufwendiger konstruierten Vorrichtungen gleichwertig ist.

Weitere besonders vorteilhafte Ausgestaltungen der Erfindung sind in den Unteransprüchen angegeben.

Die Erfindung wird nachfolgend anhand von Ausführungsbeispielen unter Bezugnahme auf die Zeichnung näher erläutert; in der Zeichnung zeigt:
- Fig. 1: eine schematische Längsschnittdarstellung einer Ausführungsform der Erfindung,
- Fig. 2: eine Darstellung des Schwenkhakens nach Fig. 1 in der Verklinkungs- und Löseposition, und
- Fig. 3: eine Längsschnittdarstellung einer vorteilhaften Ausgestaltung der Vorrichtung nach der Erfindung.

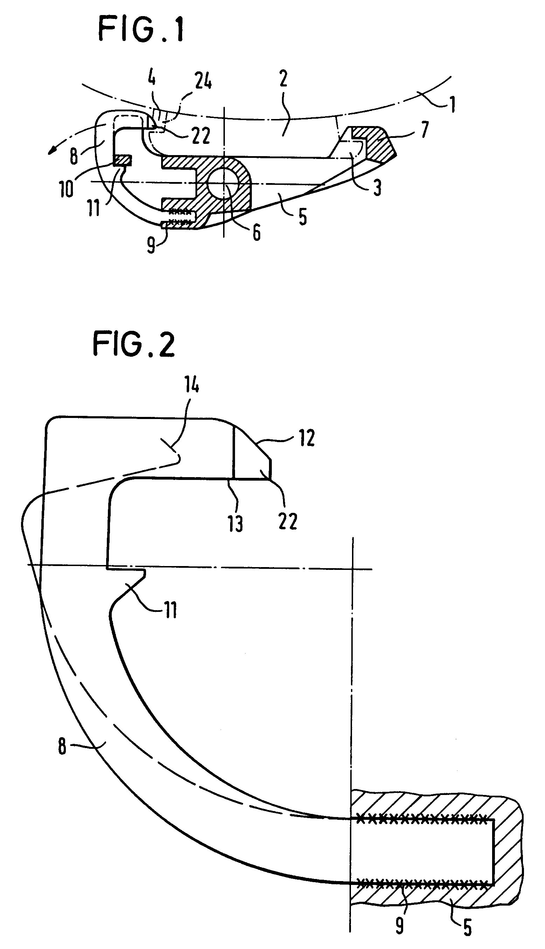

Figur 1 zeigt die Schlenkontur eines Schuhs 1, an dem eine zur lösbaren Verklinkung mit einem Fahrradpedal bestimmte Platine 2 befestigt ist.
Diese Platine 2 weist an ihrem vorderen Ende einen vorstehenden, bezüglich der Schle des Schuhs 1 einen Abstand aufweisenden Kuppelansatz 3 und an ihrem hinteren Ende eine Kuppelausnehmung 4 auf. Diese Kuppelausnehmung 4 ist in bekannter Art gestaltet und seitlich mit in der Zeichnung nicht zu sehenden Schrägflächen versehen.

Der um eine Pedalachse 6 schwenkbare Pedalkörper 5 ist an seinem vorderen Ende mit einer Festaufnahme 7 versehen, die einteilig mit dem Pedalkörper 5 ausgebildet ist und den Kuppelansatz 3 übergreift, so daß dieser im gekuppelten Zustand gegen ein vertikales Herauszieshen und auch gegen ein horizontales Herausdrehen aus dieser Festaufnahme gesichert ist.

In die rückseitige Kuppelausnehmung 4 greift ein als Schwenkhaken ausgebildetes Verhakungsorgan 8 ein, das eigenelastisch ausgebildet und mit dem Pedalkörper 5 entweder in einem Stück geformt oder mit dem Pedalkörper 5 starr verbunden ist.

Im letzteren Fall kann für den Schwenkhaken 8 ein beliebiges geeignetes Material verwendet werden, das die zu stellenden Anforderungen hinsichtlich Elastizität und mechanischer Festigkeit erfüllt.

Der Schwenkhaken 8 wird bevorzugt in einer Ausnehmung des Pedalkörpers 5, die unterhalb der Pedalachse 6 gelegen ist, befestigt, und zwar durch Schweißen, Verkleben oder dgl., und es ist in gleicher Weise möglich, eine Schraub- oder Preßsitzverbindung vorzusehen.

Der eigenelastische Schwenkhaken 8 liegt in der in Figur 1 gezeigten Verklinkungsstellung an einem Festanschlag 10 des Pedalskörpers an, und zwar insbesondere über einen angeformten Vorsprung 11. Vorzugsweise ist der Schwenkhaken 8 gegen den Festanschlag 10 unter Ausnutzung seiner Eigenelastizität vorgespannt.

Im Falle der Auslösung der geschilderten Sicherheitsverbindung durch Verschwenken des Schuhs 1 in einer horizontalen Ebene bewegt sich der Schwenkhaken 8 in Richtung des angegebenen Pfeils, wodurch die Platine 2 frei wird und die Verklinkung zwischen Schuh 1 und Pedalkörper 5 aufgehoben ist.

Figur 2 zeigt den Schwenkhaken 8 in etwas vergrößerter Darstellung und läßt erkennen, daß dieser Schwenkhaken 8 im Bereich zwischen der starren Verbindung 9 mit dem Pedalkörper kreisbogenförmig ausgebildet ist. Die Breite des Schwenkhakens 8 kann in Abhängigkeit von den gewünschten Elastizitätseigenschaften gewählt werden, wobei im Bereich des Verklinkungsendes die Breite so vorgegeben ist, daß das erforderliche Zusammenwirken mit den in den Randbereichen der Kuppelausnehmung 4 vorgesehenen Steuer-Schrägflächen gewährleistet ist.

Das Verklinkungsende des Schwenkhakens 8 ist mit einer üblichen Kuppel-Schrägfläche 12 versehen, um im Zusammenwirken mit einer ähnlichen Schrägfläche an der Platine ein bequemes Einsteigen in die Sicherheitsbindung mit anschließender Verklinkung sicherzustellen.

In Figur 2 ist der Schwenkhaken 2 in der voll ausgezeichneten Position 13 in der Verklinkungsposition, und die Löseposition 14 ist zur Verdeutlichung des vom Schwenkhaken 8 auszuführenden Schwenkweges teilweise dargestellt. Diese Verschwenkung wird in üblicher Weise durch das Zusammenwirken von Schrägflächen an Platine und Schwenkhaken bei einem horizontalen Verschwenken des Schuhs bewirkt.

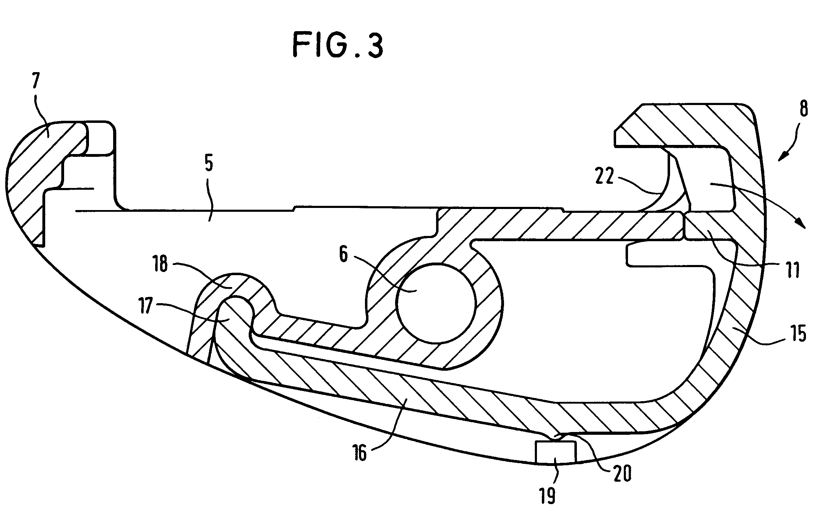

Fig. 3 zeigt in einer Längsschnittdarstellung wiederum einen Pedalkörper 5 mit Pedalachse 6, einer Festaufnahme 7 und einem mit dem allgemeinen Bezugzeichen 8 gekennzeichneten Schwenkhaken.

Dieser Schwenkhaken 8 ist in einem kurzen Bereich seines pedalseitigen Endes zum Pedalkörper 5 hin abgewinkelt und greift mit dem so gebildeten Lagerende 17 in ein entsprechendes Aufnahmelager 18 des Pedalkörpers formschlüssig ein.

In einem vorgebbaren Abstand von diesem Schwenklager 17, 18 ist ein im wesentlichen geradlinig ausgebildeter Abschnitt 16 des Schwenkhakens 8 auf einem pedalfesten Abstützelement 19 abgestützt und weist an dieser Stelle vorzugsweise einen Schwenkansatz 20 auf, der eine kleinflächige Auflage des Schwenkhakens 8 an diesem Abstützelement 19 ermöglicht.

Der gekrümmt ausgebildete Abschnitt 15 des Schwenkhakens 6 ist in analoger Weise wie bei der bereits beschriebenen Ausführungsform mit einem Hakenteil sowie entsprechenden Schrägflächen versehen, die ein Kuppeln mit der am Schuh vorgesehenen Platine und ein Lösen durch seitliches Verschwenken des Schuhs gestatten. Ein mit dem Pedalkörper 5 zusammenwirkender Anschlag ist ebenfalls in im wesentlichen analoger Weise wie bei der bereits erläuterten Ausführungsform vorhanden.

Die Fig. 3 zeigt die Vorrichtung in der Ruhestellung. Bei der Ausführung der Kopplung der Vorrichtung mit der an einem Schuh vorgesehenen Platine wird der Verhakungsteil des Schwenkhakens 8 in der durch den Pfeil angedeuteten Weise nach hinten verschwenkt, wobei zum einen der Krümmungsradius des gekrümmten Abschnitts 15 etwas erhöht und zum anderen der im wesentlichen geradlinige Abschnitt 16 zur Pedalachse hin durchgebogen wird, da der Schwenkhaken 8 im Bereich des Übergangs zwischen geradem Abschnitt 16 und gekrümmtem Abschnitt 15 in der bereits erläuterten Weise pedalfest abgestützt ist.

Befindet sich die Platine bzw. der Schuh im gekoppelten Zustand, dann übt der Schwenkhaken 8 auf die Platine eine gewisse Vorspannkraft aus, wobei diese Vorspannung aus einer leichten Biegung des geradlinigen Abschnitts 16 und einer leichten Aufweitung des gekrümmten Abschnitts 15 herrührt.

Erfolgt eine Entkopplung zwischen Schuh und Pedal durch seitliches Verschwenken des Schuhs, dann wird der Schwenkhaken 8 über die vorgesehenen Schrägflächen im Bereich des Verhakungsteils analog zu der beim Einsteigen auftretenden Verformung verhakt, jedoch bevorzugt in einem noch etwas ausgeprägteren Ausmaß.

### Bezugszeichenliste

- 1: Schuh
- 2: Platine
- 3: Kuppelansatz
- 4: Kuppelausnehmung
- 5: Pedalkörper
- 6: Pedalachse
- 7: Festaufnahme
- 8: Verhakungsorgan bzw. Schwenkhaken
- 9: Starre Verbindung
- 10: Festanschlag
- 11: Vorsprung
- 12: Kuppelschrägfläche
- 13: Verklinkungsposition
- 14: Löseposition
- 15: Gekrümmter Abschnitt des Schwenkhebels
- 16: Gerader Abschnitt des Schwenkhebels
- 17: Lagerende
- 18: Aufnahmelager
- 19: Abstützelement
- 20: Schwenkansatz

## Patentansprüche

1. Vorrichtung zur lösbaren Befestigung eines Schuhs (1) an einem Fahrradpedal (5) mit einer sohlenfesten, einen vorderen Kuppelansatz (3) und eine hintere Kuppelausnehmung (4) aufweisenden Platine (2), einer im vorderen Bereich des Pedalkörpers (5) vorgesehenen, den Kuppelansatz (3) übergreifenden, einteilig mit dem Pedalkörper ausgebildeten Festaufnahme (7) und einem im hinteren Bereich des Pedalkörpers vorgesehenen, eigenelastisch federnden Verhakungsorgan (8), das insbesondere als flächiger Schwenkhaken ausgebildet ist, in einer zur Pedalachse (6) senkrechten Richtung auslenkbar ist und in die Kuppelausnehmung (4) der Platine (2) eingreift, wobei die Verbindung zwischen Schuh (1) und Platine (2) durch Verschwenken des Schuhs (1) in einer Horizontalebene und dabei wirksam werdende Schrägflächen zwischen Kuppelausnehmung (4) und Verhakungsorgan (8) lösbar ist,
dadurch **gekennzeichnet**,
daß dem eigenelastischen Verhakungsorgan (8) ein die Verklinkungsposition bestimmender Festanschlag (10) am Pedalkörper (5) zugeordnet ist.

2. Vorrichtung nach Anspruch 1,
dadurch **gekennzeichnet**,
daß das Verhakungsorgan (8) einteilig mit dem Pedalkörper (5) ausgebildet ist.

3. Vorrichtung nach Anspruch 1 oder 2,
dadurch **gekennzeichnet**,
daß das eigenelastische Verhakungsorgan (8) über eine starre Verbindung (9) am Pedalkörper (5) befestigt ist.

4. Vorrichtung nach Anspruch 3,
dadurch **gekennzeichnet**,
daß das mit dem Pedalkörper (5) verbundene Ende des eigenelastischen Verhakungsorgans (8) in einer Ausnehmung des Pedalkörpers (5) fixiert ist.

5. Vorrichtung nach einem der vorhergehenden Ansprüche,
dadurch **gekennzeichnet**,
daß die starre Verbindung (9) zwischen Pedalkörper (5) und Schwenkhaken (8) unterhalb der Pedalachse (6) gelegen ist.

6. Vorrichtung nach einem der vorhergehenden Ansprüche,
dadurch **gekennzeichnet**,
daß das Verhakungsorgan (8) zumindest auf einem Teil seiner Länge kreisbogenförmig gekrümmt ist.

7. Vorrichtung nach einem der vorhergehenden Ansprüche,
dadurch **gekennzeichnet**,
daß das Verhakungsorgan (8) gegen den Festanschlag (10) vorgespannt ist.

8. Vorrichtung nach einem der vorhergehenden Ansprüche,
dadurch **gekennzeichnet**,
daß der Festanschlag (10) oberhalb der Pedalachse (6) gelegen und insbesondere vom hinteren Pedalkörperrand gebildet ist.

9. Vorrichtung nach einem der vorhergehenden Ansprüche,
dadurch **gekennzeichnet**,
daß am Verhakungsorgan (8) ein mit dem Festanschlag (10) zusammenwirkender Vorsprung (11) angeformt ist.

10. Vorrichtung nach einem der vorhergehenden Ansprüche,
dadurch **gekennzeichnet**,
daß das Verhakungsorgan (8) mit seinem pedalseitigen Lagerende (17) in ein Aufnahmelager (18) des Pedals (5) eingreift und mit Abstand von dem dadurch gebildeten Schwenklager an einem pedalfesten Abstützorgan (19) anliegt, so daß zumindest ein im wesentlichen gradlinig ausgebildeter Verhakungsorganbereich (16) zwischen Schwenklager (17, 18) und Abstützorgan (19) einen elastischen Biegebereich bildet.

11. Vorrichtung nach Anspruch 10,
dadurch **gekennzeichnet**,
daß der gekrümmt ausgebildete, zwischen Abstützorgan (19) und Platinen-Einhakbereich gelegene Abschnitt (15) des Verhakungsorgans (8) unter Vergrößerung seines Krümmungsradius elastisch verformbar ist.

12. Vorrichtung nach Anspruch 10 oder 11,
dadurch **gekennzeichnet**,
daß das Schwenklager (17, 18) etwa mittig zwischen der Pedalachse (6) und der Festaufnahme (7) gelegen ist.

13. Vorrichtung nach einem der Ansprüche 10 bis 12,
dadurch **gekennzeichnet**,
daß das Abstützorgran (19) bezüglich der Pedalachse (6) etwa den gleichen Abstand aufweist wie das Schwenklager (17, 18).

## Claims

1. Device for releasably securing a shoe (1) to a bicycle pedal (5) comprising a plate (2) which is fixed to the sole and which has a front coupling projection (3) and a rear coupling recess (4), a fixed mounting (7) which is formed in one piece with the pedal body and which is provided in the front region of the pedal body (5) and engages around the coupling projection (3), and an inherently elastically biased hook member (8) which is provided in the rear region of the pedal body and which is formed as a flat pivotal hook which can be deflected in a plane perpendicular to the pedal axle (6) and engages into the coupling recess (4) of the plate (2), wherein the connection between the shoe (1) and the plate (2,) is releasable by pivoting of the shoe (1) in a horizontal plane and by means of inclined surfaces which then become effective between the coupling recess (4) and the hook member (8),
characterised in that
a fixed abutment (10) on the pedal body (5) which determines the latched position is associated with the inherently elastic hook member (8).

2. Apparatus in accordance with claim 1,
characterised in that
the hook member (8) is formed in one piece with the pedal body (5).

3. Apparatus in accordance with claim 1 or 2,
characterised in that
the inherently elastic hook member (8) is secured to the pedal body (5) via a rigid connection (9).

4. Apparatus in accordance with claim 3,
characterised in that
the end of the inherently elastic hook member (8) connected to the pedal body (5) is fixed in a recess of the pedal body (5).

5. Apparatus in accordance with one of the previous claims,
characterised in that
the rigid connection (9) between the pedal body (5) and the pivotal hook (8) is disposed beneath the pedal axle (6).

6. Apparatus in accordance with one of the previous claims,
characterised in that
the hook member (8) is curved in the manner of a circular arch at least over part of its length.

7. Apparatus in accordance with one of the previous claims,
characterised in that
the hook member (8) is biased against the fixed abutment (10).

8. Apparatus in accordance with one of the previous claims,
characterised in that
the fixed abutment (10) is disposed above the pedal axle (6) and is in particular formed by the rear edge of the pedal body.

9. Apparatus in accordance with one of the previous claims,
characterised in that
a projection (11) which cooperates with the fixed abutment (10) is formed on the hook member (8).

10. Apparatus in accordance with one of the previous claims,
characterised in that
the pedal side mounting end (17) of the hook member (8) engages into a mounting bearing (18) of the pedal (5) and contacts a support member (19) fixed to the pedal at a distance from the pivot bearing formed thereby, so that at least one essentially straight region (16) of the hook member (8) between the pivot bearing (17, 18) and the support element (19) forms a resilient bending zone.

11. Apparatus in accordance with claim 10,
characterised in that
the curved section (15) of the hook member (8) disposed between the support element (19) and the region which hooks onto the plate is resiliently deformable through enlargement of its radius of curvature.

12. Apparatus in accordance with claim 10 or 11,
characterised in that
the pivot bearing (17, 18) is disposed approximately centrally between the pedal axle (6) and the fixed mount (7).

13. Apparatus in accordance with one of the claims 10 to 12,
characterised in that
the support member (19) has approximately the same spacing from the pedal axle (6) as the pivot bearing (17, 18).

## Revendications

1. Dispositif de fixation amovible d'une chaussure (1) sur une pédale de byciclette (5), avec un appendice de couplage (3) avant, relié à demeure à la semelle, avec une platine (2) reliée à demeure à la semelle et présentant un appendice de couplage (3) avant et un évidement de couplage (4) arrière, avec un logement fixe (7), prévu dans la zone avant du corps de pédale (5), enchâssant l'appendice de couplage (3) et réalisé d'un seul tenant avec le corps de pédale et avec un organe d'accrochage (8), déformable élastiquement suite à son élasticité propre et prévu dans la zone arrière du corps de pédale, réalisé en particulier sous forme de crochet pivotant plat, pouvant effectuer un débattement dans une direction perpendiculaire par rapport à l'axe de pédale (6) et s'engageant dans l'évidement de couplage (4) de la platine (2), la liaison entre chaussure (1) et platine (2) pouvant être désolidarisée par pivotement de la chaussure (1) dans un plan horizontal, avec mise en action des surfaces obliques entre évidement de couplage (4) et organe de d'accrochage (8).
caractérisé en ce qu'une butée fixe (10), déterminant la position d'encliquetage sur le corps de pédale (5), est associée à l'organe d' accrochage (8) présentaent une élasticité propre.

2. Dispositif selon la revendication 1, caractérisé en ce que l'organe d'accrochage ((1) est réalisé d'un seul tenant avec le corps de pédale (5).

3. Dispositif selon la revendications 1 ou 2, caractérisé en ce que l'organe d'accrochage (8) présentant une élasticité propre est fixé sur le corps de pédale (5), par l'intermédiaire d'une liaison (9) rigide.

4. Dispositif selon la revendication 3, caractérisé en ce que l'extrémité, reliée au corps de pédale (5), de l'organe d'accrochage (8) présentant une élasticité propre est fixée dans un évidement du corps de pédale (5).

5. Dispositif selon l'une des revendications précédentes, caractérisé en ce que la liaison rigide (9) entre corps de pédale (5) et crochet pivotant (8) est placée au dessous de l'axe de pédale (6).

6. Dispositif selon l'une des revendications précédentes, caractérisé en ce que l'organe d'accrochage (8) est incurvé en arc de cercle, au moins sur une partie de sa longueur.

7. Dispositif selon l'une des revendications précédentes, caractérisé en ce que l'organe d'accrochage (8) est précontraint contre la butée fixe (10).

8. Dispositif selon l'une des revendications précédentes, caractérisé en ce que la butée fixe (10) est placée audessus de l'axe de pédale (6) et, en particulier, constituée par le bord arrière du corps de pédale.

9. Dispositif selon l'une des revendications précédentes, caractérisé en ce qu'une saillie (11), coopérant avec la butée fixe (10), est formée d'un seul tenant sur l'organe d'accrochage (8).

10. Dispositif selon l'une des revendications précédentes, caractérisé en ce que l'organe d'accrochage (8) s'engage, par son extrémité de palier (17) située côté pédale, dans un palier de réception (18) de la pédale (5) et appuie, à distance du palier de pivotement ainsi constitué, sur un organe d'appui (19) fixe par rapport a la pédale, de manière qu'au moins une zone (16) de l'organe d'accrochage, réalisée sensiblement rectiligne, constitue une zone de flexion élastique entre le palier de pivotement (17, 18) et l'organe d'appui (19).

11. Dispositif selon la revendication 10, caractérisé en ce que la section (15), incurvée, située entre l'organe d'appui (19) et la zone d'accrochage de platine, de l'organe d'accrochage (8) est déformable élastiquement, avec augmentation de son rayon de courbure.

12. Dispositif selon la revendication 10 ou 11, caractérisé en ce que le palier de pivotement (17, 18) est placé à peu près au centre, entre l'axe de pédale (6) et le logement fixe (7).

13. Dispositif selon l'une des revendication 10 à 12, caractérisé en ce que l'organe d'appui (19) présente à peu près le même espacement, vis-à-vis de l'axe de pédale (6), que le palier de pivotement (17, 18).
